# FASCICULE DE BREVET EUROPEEN

(11) **EP 3 674 332 B1**
(45) Date de publication et mention de la délivrance du brevet: **01.11.2023**
(21) Numéro de dépôt: 19219729.1
(22) Date de dépôt: 26.12.2019
(51) Int. Cl.: C08F 120/36, B63B 59/04, C08F 220/36, C09D 5/16, C09D 133/14

(54) **REVÊTEMENT ANTIFOULING**
ANTIFOULING-BESCHICHTUNG
ANTI-FOULING COATING

(30) Priorité: 26.12.2018 FR 1874112
(43) Date de publication de la demande: 01.07.2020
(73) Titulaire: Naval Group, 75015 Paris (FR); Université de Toulon, 83130 La Garde (FR)
(72) Inventeur: BLACHE, Yves, 83041 Toulon Cedex 9 (FR); BRESSY, Christine, 83041 Toulon Cedex 9 (FR); DEZANNET, Clément, 56311 Lorient (FR)
(74) Mandataire: Lavoix

(56) Documents cités:
- EP-A1- 0 866 103
- WO-A1-2010/089378
- WOUTER M. J. KLOOSTERMAN ET AL: "Chemo-enzymatic synthesis route to poly(glucosyl-acrylates) using glucosidase from almonds", GREEN CHEMISTRY, vol. 16, no. 4, 1 janvier 2014 (2014-01-01), pages 1837-1846, XP055239381, GB ISSN: 1463-9262, DOI: 10.1039/C3GC41115J

## Description

La présente invention porte sur un revêtement pour la protection d'une structure immergée contre les salissures marines. Ainsi l'invention concerne un revêtement anti-salissures marines (connu sous l'appellation anglo-saxonne « antifouling »).

La présente invention concerne aussi un polymère bio-hydrolysable et des compositions le comprenant.

La présente invention concerne aussi un procédé ou méthode de dégradation d'un revêtement par hydrolyse enzymatique.

### Etat de la technique

Actuellement, plusieurs solutions existent pour lutter contre les salissures marines. En ce qui concerne l'immersion de structures (bâtiment de surface et sous-marins principalement, voire les structures des Énergies marines renouvelables (EMR)) en eau de mer, ce sont pour le moment les revêtements antifouling qui sont le plus adaptés.

Les revêtements antifouling les plus efficaces sont les SPC (revêtement autopolissant, en anglais « self polishing coating ») et les FRC (revêtement anti-salissure à faible adhérence, en anglais « Foui release coating »).

Les SPC sont constitués en général d'un liant copolymère acrylique et d'agents biocides. Au contact de l'eau de mer, les copolymères à la surface du revêtement sont hydrolysés et les biocides solubilisés ce qui libère les biocides de façon continue et contrôlée. L'hydrolyse permet de « renouveler » la couche supérieure du revêtement d'où le terme « autopolissant ». La couche érodée entraîne avec elle les micro- et macro-organismes qui ont adhéré malgré le relargage de biocides. Ces revêtements sont efficaces en modes statique et dynamique. Bon marché, ils présentent une bonne performance antifouling en mode statique et ont une durée de vie de 5 ans environ. Par contre, ils comprennent des biocides à éviter et dont certains font l'objet d'un contrôle particulier et peuvent même, à terme, être interdits comme l'a été par exemple le tributylétain (TBT) au niveau mondial en 2008.

Les FRC sont en général des revêtements à base d'élastomères silicones ou polymères fluorés contenant des additifs de type huiles ou copolymères amphiphiles possédant un faible module élastique et une faible énergie de surface. Ces propriétés permettent de diminuer l'adhésion des organismes marins et de favoriser leur élimination sous contrainte mécanique telle que la mise en mouvement de la structure ou un nettoyage. La surface lisse de ces revêtements permet de limiter la trainée hydrodynamique et donc de diminuer la consommation en carburant et la production de gaz à effet de serre. Enfin, ce type de revêtement est souvent peu résistant aux chocs et efficace seulement en mode dynamique, les périodes à quai d'un navire sont donc à limiter.

Des revêtements hybrides sont à l'étude pour lutter contre le biofouling en combinant les caractéristiques de deux revêtements (FRC/SPC, matrice soluble/FRC, etc.). Les revêtements hybrides FRC/SPC auront donc les propriétés physiques des FRC et chimiques des SPC. Ils sont composés de silicones élastomères greffés par des biocides, qui migrent à la surface du revêtement pour inhiber la formation de biofilm. De plus, ils sont plus efficaces que les FRC en mode statique, mais cette technique reste dépendante des biocides utilisés.

EP 0 866 103 décrit une composition de revêtement comprenant une résine filmogène, une enzyme et un substrat, capable de libérer de manière contrôlée des composés ayant une activité antimicrobienne.

*Kloostermann et al.* décrivent une voie de synthèse de poly(glucosyl-acrylates) par voie radicalaire utilisant une enzyme glucosidase.

Le problème majeur de ces revêtements reste principalement le respect de l'environnement. De plus, les FRC étant pour la plupart, constitué d'une matrice silicone, ils imposent des contraintes d'application plus élevées que les SPC. Tous les chantiers ne sont pas aptes à appliquer des FRC.

### But de l'invention

L'invention a pour but de résoudre le problème technique consistant à fournir un revêtement et/ou traitement pour la protection d'une structure immergée contre le développement de salissures marines.

L'invention a pour but de résoudre le problème technique consistant à fournir un revêtement et/ou traitement efficace contre les salissures marines, c'est-à-dire un revêtement antifouling, en particulier contre le biofouling.

L'invention a pour but de résoudre le problème technique consistant à fournir un revêtement et/ou traitement ne contenant pas de biocides.

L'invention a pour but de résoudre le problème technique consistant à fournir un revêtement et/ou traitement ne générant pas de déchets toxiques pour le domaine maritime ou dans une mesure acceptable et bénéfique par rapport à l'état de la technique.

L'invention a pour but de résoudre le problème technique consistant à fournir un revêtement et/ou traitement hydrolysable en milieu marin.

L'invention a pour but de résoudre le problème technique consistant à fournir un revêtement et/ou traitement autopolissant, c'est-à-dire dont la couche supérieure du revêtement se renouvelle en milieu marin.

Plus généralement, l'invention a pour but de résoudre le problème technique consistant à fournir un revêtement et/ou traitement limitant la trainée hydrodynamique, par exemple pour diminuer la consommation en carburant et la production de gaz à effet de serre.

L'invention a aussi pour but de résoudre le problème technique consistant à fournir un revêtement et/ou traitement résistant aux chocs et efficace en modes statique et dynamique.

L'invention a également pour but de résoudre les problèmes techniques ci-dessus en proposant un revêtement aux propriétés thermomécaniques améliorées, et en particulier de fournir un revêtement qui n'est pas fragile aux fissures ou aux stries.

L'invention a aussi pour but de résoudre le problème technique consistant à fournir un revêtement et/ou traitement applicable sans nécessiter d'installation de chantier spécifique pour appliquer le revêtement.

### Description de l'invention

Il a été découvert qu'un revêtement et/ou traitement selon l'invention permet de résoudre un ou plusieurs des problèmes techniques posés par l'invention.

En particulier, l'invention concerne un revêtement d'une structure immergée, ledit revêtement comprenant au moins polymère bio-hydrolysable comprenant au moins un sucre hydrolysable par une enzyme β-glucosidase.

Le revêtement proposé est un revêtement bio-hydrolysable respectant l'environnement et le Règlement de l'Union Européenne concernant la mise à disposition sur le marché et l'utilisation des produits biocidess (EU Biocides Régulation 528/2012 (EU BPR)) par l'absence d'incorporation de biocides.

Lors de la croissance du biofilm, les bactéries marines secrètent entre autres des enzymes dont certaines sont capables d'hydrolyser les sucres. Ce sont ces enzymes que l'on vise pour amorcer et contrôler l'érosion d'un revêtement selon l'invention. La biolyse enzymatique est suivie d'une hydrolyse classique par l'eau de mer d'où le terme « bio-hydrolysable ».

Selon un mode de réalisation, le polymère bio-hydrolysable utilisé à titre de revêtement d'une structure immergée comprend au moins un groupe d'atomes liant par liaison covalente le sucre hydrolysable avec un groupe polymérisable.

Par exemple, le groupe liant est un groupe phényl porteur d'un groupe nitro.

Selon un mode de réalisation, le groupe liant est un groupe de formule suivante :

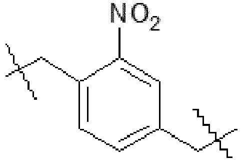

Dans laquelle les liaisons covalentes au reste de la molécule étant représentées par

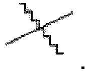

De préférence, le sucre hydrolysable est une unité P-D-Glucopyranose.

Selon un mode de réalisation, le monomère formant le groupe polymérisable comprend un groupe conjugué porteur d'un groupe labile générant un ion carboxylate après hydrolyse.

Parmi les polymères bio-hydrolysables utilisés pour le revêtement selon l'invention, ceux préférés et considérés indépendamment sont les polymères bio-hydrolysables comprenant un monomère de structure chimique (I) suivante : 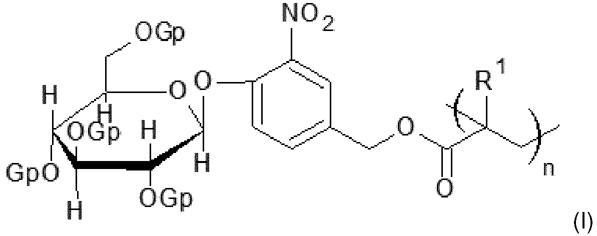 où R₁ est H ou CH₃ et n est nombre d'unités monomères et Gp représente indépendamment à chaque occurrence H ou un groupe protecteur.

Une autre représentation d'un polymère bio-hydrolysable (I) est la suivante (exemple avec Gp =H et R₁ = CH₃):

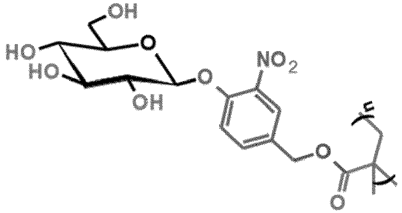

L'invention concerne donc de tels polymères et les monomères permettant leur obtention. L'invention concerne en particulier les monomères de formule (II) :

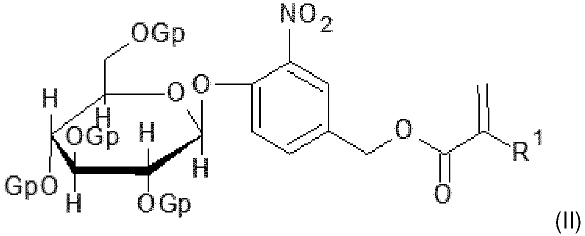

R₁ est H ou CH₃ et Gp représente indépendamment à chaque occurrence H ou un groupe protecteur.

Une autre représentation d'un polymère bio-hydrolysable (I) est la suivante (exemple avec Gp =H et R₁ = CH₃):

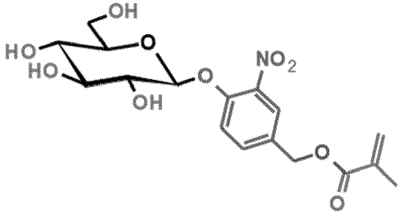

Avantageusement, un polymère bio-hydrolysable selon l'invention comprend une unité monomère comprenant un sucre hydrolysable par une enzyme β-glucosidase.

Selon un mode de réalisation, l'unité monomère comprenant un sucre hydrolysable par une enzyme β-glucosidase selon l'invention comprend trois parties identifiables, à savoir :
- Une tête de reconnaissance ou déclencheur ou « Recognition head » : qui représente l'extrémité du polymère reconnue et hydrolysée par les enzymes β-glucosidase. Dans ce cas, il s'agit du β-glucose (sucre) puisque ce sont les β-glucosidases qui sont visées.
- Un groupe de piégeage ou espaceur ou « Trapping device » : qui fait le lien entre le sucre facilement hydrolysable et le polymère. Avantageusement, le groupement fortement conjugué facilite la formation des ions carboxylates. Avantageusement, le groupe « nitro » est connu pour faciliter le clivage enzymatique de la liaison glycosidique.
- Un groupe polymérisable ou effecteur ou « Reporter group » : qui est constituée d'une fonction polymérisable. Avantageusement, le groupement méthacrylate est utilisé pour les revêtements selon l'invention. En effet, il est peu coûteux, facilement polymérisable et s'hydrolyse dans l'eau de mer.

### L'enzyme β-glucosidase hydrolyse le sucre.

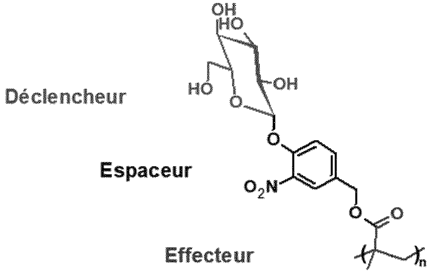

Au sens de l'invention on entend par « polymérisation » à la fois la polymérisation d'un homopolymère ou d'un copolymère, sauf indication contraire.

Au sens de l'invention on désigne par « polymère » à la fois un homopolymère ou un copolymère, sauf indication contraire.

Selon un mode de réalisation, le polymère est un homopolymère.

Selon un mode de réalisation, le polymère est un copolymère, et notamment est un copolymère statistique. Le groupe polymérisable peut donc être constitué à partir de plusieurs monomères de structures chimiques différentes.

Ainsi, selon un mode de réalisation, un polymère bio-hydrolysable selon l'invention comprend une alternance d'une ou plusieurs unités monomères comprenant un sucre hydrolysable et d'un autre monomère de préférence hydrolysable par l'eau de mer.

Avantageusement, les copolymères statistiques permettent d'améliorer les propriétés filmogènes en abaissant la Tg (température de transition vitreuse du polymère) et par la même occasion de diminuer sensiblement le coût de production du revêtement.

Selon un mode de réalisation, le polymère est un copolymère de formule (IV) suivante : 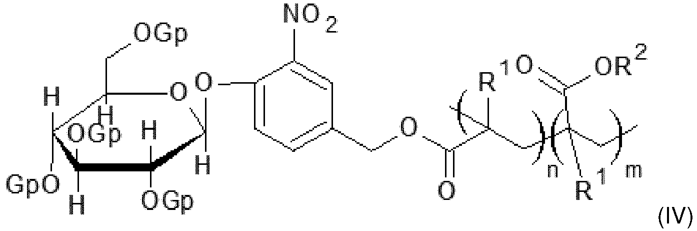 où R₁ représente indépendamment à chaque occurrence H ou CH₃; R₂ représente un alkyle, linéaire ou ramifié, en C₁-C₂₂, aryle, aralkyle, ces radicaux pouvant être substitués et pouvant contenir des hétéroatomes, Gp représente indépendamment à chaque occurrence H ou un groupe protecteur, et où n et m sont les nombre d'unités des comonomères dans le copolymère.

Selon un mode de réalisation, le groupe polymérisable s'hydrolyse dans l'eau de mer.

De préférence, le groupe polymérisable est un groupe méthacrylate.

Le polymère de l'invention peut être avantageusement préparé en présence d'un ou plusieurs comonomères pour former un copolymère.

Parmi les comonomères on peut citer ceux menant au motif polymérique suivant : 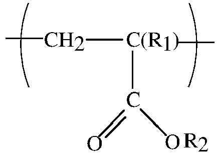 avec R₁ représente H ou CH₃

R₂ représente un alkyle, linéaire ou ramifié, en C₁-C₂₂, aryle, aralkyle, ces radicaux pouvant être substitués et pouvant contenir des hétéroatomes.

On peut citer comme monomère la structure (III) suivante :

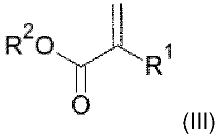

On peut citer par exemple : (méth)acrylate de lauryle, (méth)acrylate de stéaryle, (méth)acrylate de méthyle, (méth)acrylate d' éthyle, (méth)acrylate de propyle (tous les isomères), (méth)acrylate de butyle (tous les isomères), (méth)acrylate de 2-éthylhexyle, (méth)acrylate d' isobornyle, anhydride maléique, acide (méth)acrylique, (méth)acrylate de benzyle, (méth)acrylate de phényle, (méth)acrylonitrile, alpha-méthylstyrene, styrène, (méth)acrylates et styrènes fonctionnalisés sélectionnés parmi le (méth)acrylate d' hydroxypropyle (tous les isomères), (méth)acrylate d' hydroxybutyle (tous les isomères), (méth)acrylate d' hydroxyéthyle (tous les isomères), (méth)acrylate de N,N- diméthylaminoéthyle, (méth)acrylate de N,N-diéthylaminoéthyle, (méth)acrylate de triéthylène glycol, itaconic anhydride, (méth)acrylate de glycidyle, (méth)acrylamide, N-méthyl(méth)acrylamide, N,N-diméthyl(méth)acrylamide, N-tert-butyl(méth)acrylamide, N-n-butyl(méth)acrylamide, N-méthylol(méth)acrylamide, N-éthylol(méth)acrylamide, acide benzoïque vinylique (tous les isomères), diéthylaminostyrène (tous les isomères), alpha-méthyl vinyl acide benzoique (tous les isomères), diéthylaminoalpha-méthylstyrène (tous les isomères), acide sulfonique p-vinylbenzène, sel de sodium de l'acide sulfonique p-vinylbenzène, triméthoxysilylpropyl(méth)acrylate, triéthoxysilylpropyl(méth)acrylate, tributoxysilylpropyl (méth)acrylate, diméthoxyméthylsilylpropyl acrylate, diéthoxyméthylsilylpropyl acrylate, dibutoxyméthylsilylpropyl acrylate, diisopropoxysilylpropyl acrylate, acétate de vinyle, butyrate de vinyle, benzoate de vinyle, chlorure de vinyle, N-vinylpyrrolidone.

Selon un mode de réalisation, un monomère est un méthacrylate d'acide gras, de préférence le méthacrylate de lauryle.

Selon le standard habituel, (Méth)acrylate signifie aussi bien les monomères de type méthacrylate qu'acrylate.

Selon une variante, le rapport molaire des comonomères, et par exemple des monomères (III)/(II), est compris entre 10/90 et 90/10.

Selon une variante, le rapport molaire des comonomères, et par exemple des monomères (III)/(II), est compris entre 20/80 et 80/20.

Selon une variante, le rapport molaire des comonomères, et par exemple des monomères (III)/(II), est compris entre 30/70 et 70/30.

Selon une variante, le rapport molaire des comonomères, et par exemple des monomères (III)/(II), est compris entre 40/60 et 60/40.

Selon une variante, le rapport molaire des comonomères, et par exemple des monomères (III)/(II), est d'environ 50/50.

Selon une variante, le polymère présente une masse molaire moyenne en nombre Mn supérieure à 5000 g/mol ou à 6000 g/mol.

Selon une variante, le polymère présente une masse molaire moyenne en nombre Mn comprise entre 5000 et 20000 g/mol ou entre 6000 et 15000 g/mol.

Selon une variante, le polymère présente un indice de dispersité Ð inférieur à 1,4 et de préférence inférieur à 1,3 et encore de préférence inférieur à 1,2.

Les conditions de polymérisation RAFT sont définies selon les connaissances de l'homme du métier.L'invention concerne également un procédé de préparation d'un polymère bio-hydrolysable tel que défini selon l'invention, ledit procédé comprenant la polymérisation radicalaire du groupe polymérisable pour former ledit polymère bio-hydrolysable, ledit polymère bio-hydrolysable présentant la structure chimique (I) ou (IV) telle que définie ci-dessus.Selon une variante, ladite polymérisation radicalaire est mise en oeuvre selon le procédé RAFT, de préférence en utilisant un dithioester, tel que par exemple le cyano isopropyl dithiobenzoate (CPDB), comme agent de transfert.

De préférence, la polymérisation est réalisée avec un monomère (I) protégé par des groupes protecteurs (Gp), c'est-à-dire que les fonctions hydroxy du sucre hydrolysable ne sont sensiblement pas réactives lors de la polymérisation. Typiquement, les groupes protecteurs sont des groupes acétyles formant ainsi des fonctions O-Acétyles sur l'unité sucre.

Ainsi, selon une variante, le polymère comprend des groupes protecteurs, et typiquement des groupes acétyles, sur le sucre hydrolysable.

Selon une variante, le polymère protégé subit un déprotection des fonctions portant des groupes protecteurs, et typiquement des groupes acétyles, sur l'unité sucre.

Selon un mode de réalisation, le polymère selon l'invention libère lors de son hydrolyse enzymatique une chaine polymère comprenant des groupes carboxylate.

Avantageusement, la chaine polymère comprenant des groupes carboxylate libérée du polymère de formule (I) entraîne le détachement de biosalissures.

L'invention concerne un polymère bio-hydrolysable tel que défini selon la présente invention et en particulier comprenant au moins un groupe liant un sucre hydrolysable avec un groupe polymérisable, ledit sucre étant hydrolysable par une enzyme β-glucosidase, ledit polymère présentant la structure chimique (I) ou (IV) telle que définie ci-dessus.

L'invention concerne aussi une composition, notamment de peinture d'une structure immergée, caractérisée en ce qu'elle comprend un polymère bio-hydrolysable selon l'invention.

L'invention concerne également l'utilisation d'un polymère bio-hydrolysable tel que défini selon la présente invention à titre de revêtement d'une structure immergée.

L'invention concerne également un procédé ou méthode de dégradation d'un revêtement selon l'invention, comprenant :
la mise en contact d'un revêtement comprenant au moins polymère bio-hydrolysable comprenant au moins un sucre hydrolysable par une enzyme β-glucosidase selon l'invention avec un microorganisme sécrétant une β-glucosidase, et
l'hydrolyse du polymère bio-hydrolysable.

Le schéma ci-dessous illustre un mécanisme de bio-hydrolyse d'un polymère cible (9) et les sous-produits (10, 12 et 15) relargués dans le milieu environnant.

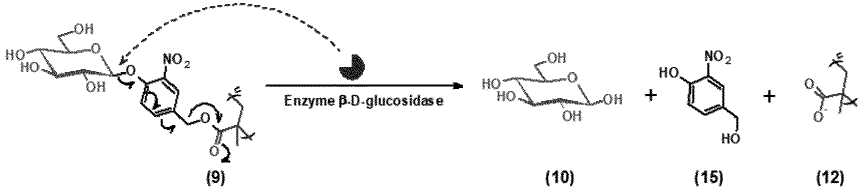

Ce principe peut être généralisé aux polymères biohydrolysables selon l'invention.

De préférence, le polymère biohydrolysable selon l'invention en présence de microorganismes marins sécrétant une enzyme β-glucosidase s'hydrolyse en particulier en clivant la liaison β-glucosidique avec le groupe liant.

Le polymère cible (9), faisant avantageusement office de liant polymère dans la composition, par exemple la peinture, est donc un dérivé du β-D-glucose hydrolysable par une enzyme β-D-glucosidase. Son hydrolyse génère le carboxylate (12) qui par sa solubilité en milieux aqueux entraîne le détachement de biosalissures.

Parmi les bactéries marines on peut citer les bactéries marines du type *vibrio* (ex. *vibrio vulnificus*), *shewanella* (ex. *shewanella baltica*) et *pseudoalteromonas* (ex. *pseudoalteromonas marina*). Leurs enzymes sont alors capables d'engendrer la lyse d'un certain nombre de sucre.

Des tests enzymatiques ont été réalisés afin de valider le concept de biohydrolyse des sucres par les enzymes.

Des tests biologiques ont permis de vérifier qu'aucun des composés relargués n'est toxique pour les bactéries marines.

Ainsi, l'invention fournit :
- un revêtement et/ou traitement pour la protection d'une structure immergée contre le développement de salissures marines ;
- un revêtement et/ou traitement efficace contre les salissures marines, c'est-à-dire un revêtement antifouling, en particulier contre le biofouling ;
- un revêtement et/ou traitement ne contenant pas de biocides ;
- un revêtement et/ou traitement ne générant pas de déchets toxiques pour le domaine maritime ou dans une mesure acceptable et bénéfique par rapport à l'état de la technique ;
- un revêtement et/ou traitement hydrolysable en milieu marin ;
- un revêtement et/ou traitement autopolissant, c'est-à-dire dont la couche supérieure du revêtement se renouvelle en milieu marin ;
- un revêtement et/ou traitement limitant la trainée hydrodynamique, par exemple pour diminuer la consommation en carburant et la production de gaz à effet de serre ;
- un revêtement et/ou traitement résistant aux chocs et efficace en modes statique et dynamique ;
- un revêtement aux propriétés thermomécaniques améliorées, et en particulier de fournir un revêtement qui n'est pas fragile aux fissures ou aux stries ;
- un revêtement et/ou traitement applicable sans nécessiter d'installation de chantier spécifique pour appliquer le revêtement.

L'invention concerne également une structure immergée, notamment navire ou plateforme immergée, caractérisée en ce qu'elle comprend au moins sur une partie de sa surface, de préférence de sa surface immergée, un revêtement tel que défini selon l'invention. Par exemple, il s'agit d'un bâtiment de surface, d'un sous-marins ou d'une structure d'Énergie marine renouvelable (EMR).

D'autres buts, caractéristiques et avantages de l'invention apparaîtront clairement à l'homme de l'art suite à la lecture de la description explicative qui fait référence à des exemples qui sont donnés seulement à titre d'illustration et qui ne sauraient en aucune façon limiter la portée de l'invention.

Les exemples font partie intégrante de la présente invention et toute caractéristique apparaissant nouvelle par rapport à un état de la technique antérieure quelconque à partir de la description prise dans son ensemble, incluant les exemples, fait partie intégrante de l'invention dans sa fonction et dans sa généralité.

Ainsi, chaque exemple a une portée générale.

D'autre part, dans les exemples, tous les pourcentages sont donnés en masse, sauf indication contraire, et la température est exprimée en degré Celsius sauf indication contraire, et la pression est la pression atmosphérique, sauf indication contraire. La température est celle ambiante (20°C) , sauf indication contraire.

### Exemples

### Exemple 1 - Synthèse du monomère protégé (6) :

La synthèse du monomère protégé **(6)** est décrite dans le schéma 1. Cette méthode de synthèse permet de produire de façon reproductible le composé **(6)** en 3 étapes et avec d'excellents rendements pour chacune d'entre elles.

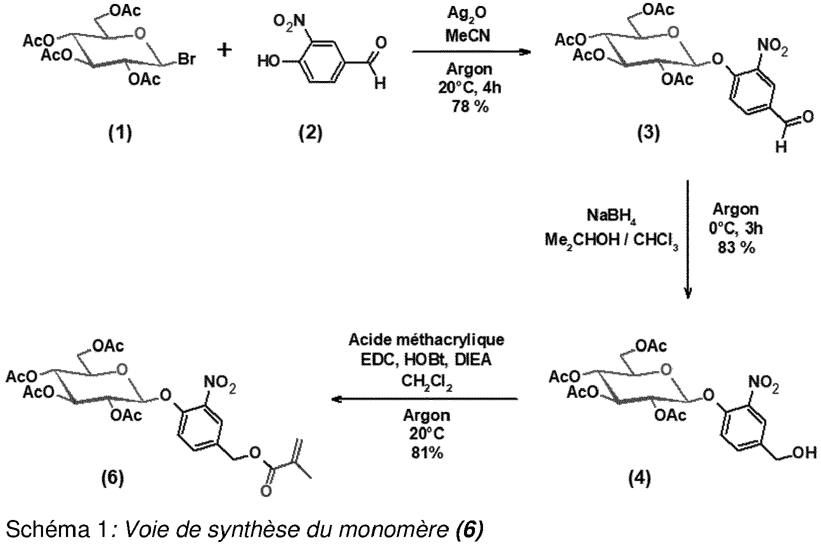

### Exemple 2 - Formation de l'homopolymère protégé (8) :

L'homopolymère est synthétisé par voie radicalaire et plus spécifiquement la méthode de polymérisation radicalaire choisie est la polymérisation RAFT (Réversible Addition-Fragmentation chain Transfer) car elle permet de contrôler la distribution et les masses molaires des polymères formés. Le polymère protégé **(8)** est ensuite déprotégé pour former le polymère **(9).**

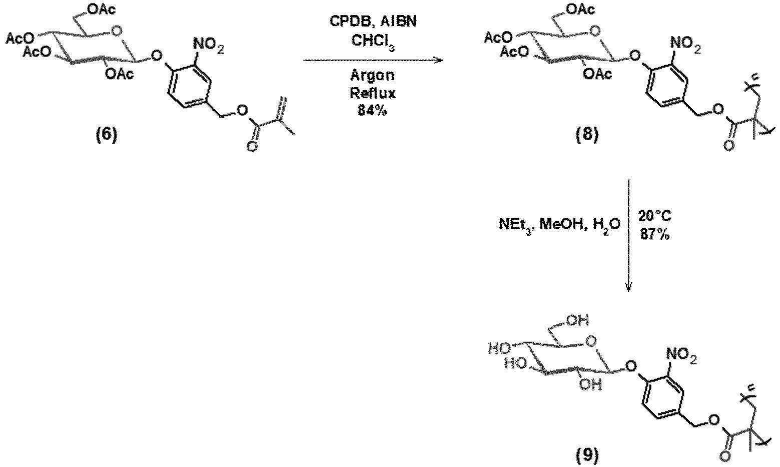

### Synthèse de l'homopolymère protégé (8) par voie RAFT et formation du polymère déprotégé (9)

Cette méthode de polymérisation permet de former avec succès l'homopolymère protégé **(8)** avec un taux de conversion supérieur à 86% après purification par simple précipitation dans le méthanol. Enfin, l'homopolymère cible **(9)** est obtenu après désacétylation du composé **(8)** avec un rendement de 87%. Cependant, les propriétés thermomécaniques de ce composé ne sont pas optimales puisque la température de transition vitreuse (T_{g}) est trop élevée. Le revêtement obtenu est de qualité insatisfaisante pour les inventeurs car il est trop fragile (stries, fissures, etc.).

### Exemple 3 - Synthèse de copolymères

Les copolymères statistiques sont synthétisés par voie radicalaire et plus spécifiquement, la méthode de polymérisation radicalaire choisie est la polymérisation RAFT (Réversible Addition-Fragmentation chain Transfer).

Les copolymères statistiques permettent d'améliorer les propriétés filmogènes en abaissant la T_{g} et par la même occasion de diminuer sensiblement le coût de production du revêtement. En effet, le co-monomère choisi (méthacrylate de lauryle, LM) est bon marché contrairement au monomère biohydrolysable **(6)** qui nécessite des réactifs onéreux (CPDB, etc.). Le LM est un monomère utilisé en tant que précurseur de matrices polymères (ou liants) dans certains revêtements antifouling SPC et dans le domaine de la chimie, les vernis, les adhésifs, les plastiques, etc. De plus, l'homopolymère poly(LM) a une T_{g} relativement basse dans nos conditions de synthèse (-36°C pour le poly(LM)) et possède la même fonction polymérisable (méthacrylate) que le monomère cible ce qui évite les problèmes de dérive dans la composition des chaînes polymères lors de la production.

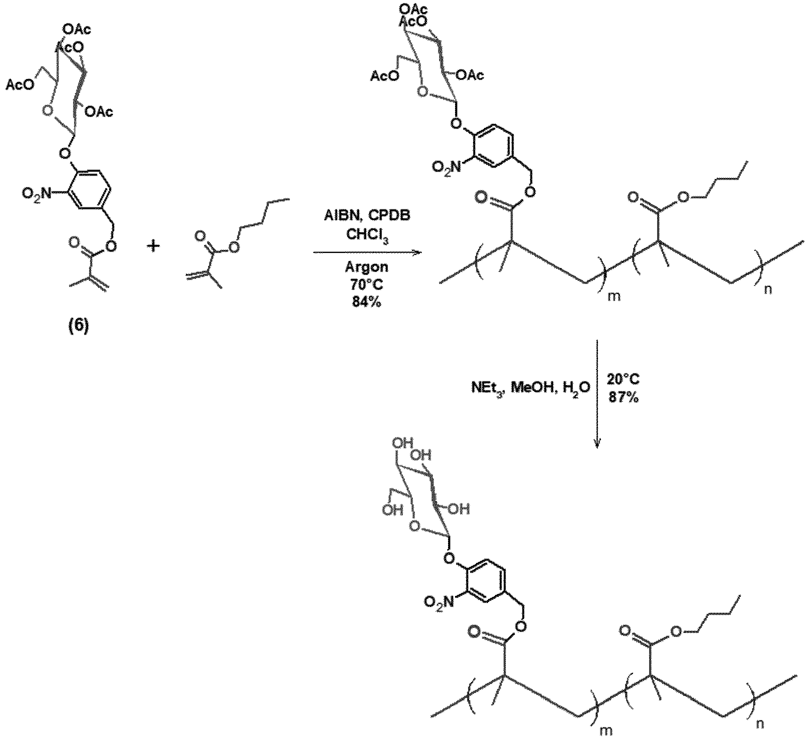

### Voie de synthèse des copolymères illustrée avec le méthacrylate de butyle

On utilise selon l'exemple 3 le méthacrylate de lauryle (LM) lieu du méthacrylate de butyle (du schéma de principe).

La synthèse de ces copolymères statistiques à l'échelle du laboratoire (quelques grammes) a été optimisée. Plusieurs copolymères ont été synthétisés pour avoir les meilleures propriétés filmogènes (pas de craquelures, ni d'écailles).

En réalisant des exemples en faisant varier le rapport molaire LM/monomère entre 0/100 et 50/50 on obtient des polymères présentant une Tg d'environ de 50°C à 160°C, une Mn d'environ 7000 à 12000 g/mol et où Ip (ou Ð) va de 1,1 à 1,2.

Il s'avère que le copolymère statistique contenant 70% mol. de méthacrylate de lauryle (LM) et 30% mol. de monomère biohydrolysable, présente les meilleures propriétés filmogènes.

### Exemple 4 - Evaluation de la biohydrolyse :

Enfin, les tests de biohydrolyse réalisés (suivi par LC/MS de la concentration en nitrophénol **(15)** relarguée au cours du temps) dans de l'eau distillée et dans de l'eau de mer permettent de valider ce concept et de calculer le taux de relargage moyen en nitrophénol au cours du temps (1,3µg/cm²/jour).

### Exemple 5 - Evaluation de l'efficacité antibiofilm

Deux souches bactériennes TC8 (*Pseudoalteromonas lipolytica*) et TC11 (*Shewanella pneumatophori*) pionnières du biofouling utilisées au cours de ce projet ont été extraites de la rade de Toulon.

Le revêtement bio-hydrolysable n'a pas vocation à freiner l'adhésion des bactéries comme peuvent l'être les SPCs. Toutefois, étant donné que les bactéries qui secrètent les enzymes β-D-glucosidases sont responsables de l'érosion du revêtement, il est important de savoir si ce revêtement inhibe l'adhésion bactérienne. Plus il y aura de bactéries sur le revêtement et plus la cinétique d'érosion sera importante. Pour cela, des tests de bio-adhésion sont réalisés sur les coverslips recouverts d'un film du polymère protégé **(8).** Le Tableau 1, montre que le polymère **(8)** diminue légèrement l'adhésion de ces bactéries par rapport aux coverslips non revêtus utilisés comme témoin (taux d'adhésion de 100%).

**[Table 1]**

| **Bactérie** | **Pourcentage d'adhésion (%)** | **Ecart type** |
|---|---|---|
| **TC8** | 61,4 | 6,4 |
| **TC11** | 64,3 | 6,7 |

### Tableau 1 : Résultats des bio-essais d'anti-adhésion bactérienne

Les images obtenues au microscope confocal mettent en évidence que la densité bactérienne est beaucoup plus faible sur le coverslip recouvert avec l'homopolymère **(8).**

### Exemple 6 - Evaluation de la toxicité des molécules relarguées

Les tests biologiques de croissance et de toxicité (Tableau 2) ont démontré que le nitrophénol **(15)** qui est déjà utilisé dans le domaine médical n'est pas toxique pour le domaine maritime (CL₅₀) même à des concentrations élevées en nitrophénol (200 µM).

**[Table 2]**

| **Concentration médiane** | **TC8** | **TC11** |
|---|---|---|
| Létale (CL₅₀) | / | / |
| Inhibitrice (Cl₅₀) | 170 µM +/- 20,7 | 189,9 µM +/- 1,7 |
| Efficace (CE₅₀) | / | / |

### Tableau 2 : Impact du nitrophénol sur deux bactéries marines, TC8 (Pseudoalteromonas lipolytica) et TC 11 (Shewanella pneumatophori)

Les bio-essais bactériens mettent aussi en évidence que ce composé influence la croissance bactérienne (Cl₅₀) seulement à des concentrations élevées (200 µM) mais en aucun cas l'adhésion bactérienne (CE₅₀).

La voie de synthèse du monomère est clairement identifiée et reproductible. Plusieurs copolymères ont également été synthétisés et les rapports optimisés pour obtenir les propriétés filmogènes souhaitées.

Ainsi, l'invention fournit un revêtement et/ou traitement efficace contre le biofouling tout en respectant l'environnement.

## Revendications

1. Revêtement d'une structure immergée, ledit revêtement comprenant au moins un polymère bio-hydrolysable comprenant au moins un sucre hydrolysable par une enzyme β-glucosidase.

2. Revêtement, selon la revendication 1, **caractérisé en ce que** le polymère bio-hydrolysable comprend au moins un groupe d'atomes liant par liaison covalente le sucre hydrolysable et un groupe polymérisable.

3. Revêtement, selon la revendication 1 ou 2, **caractérisé en ce que** le groupe polymérisable s'hydrolyse dans l'eau de mer.

4. Revêtement, selon l'une quelconque des revendications 1 à 3, **caractérisé en ce que** le monomère formant le groupe polymérisable comprend un groupe conjugué porteur d'un groupe labile générant un ion carboxylate après hydrolyse.

5. Revêtement, selon l'une quelconque des revendications 1 à 4, **caractérisé en ce que** le polymère bio-hydrolysable présente la structure chimique (I) ou (IV) suivante : 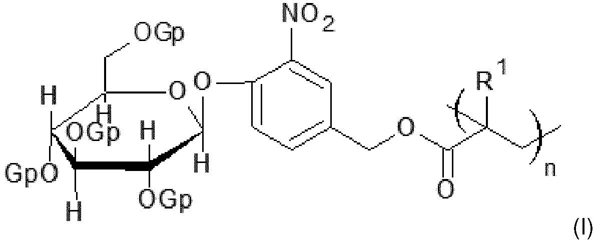 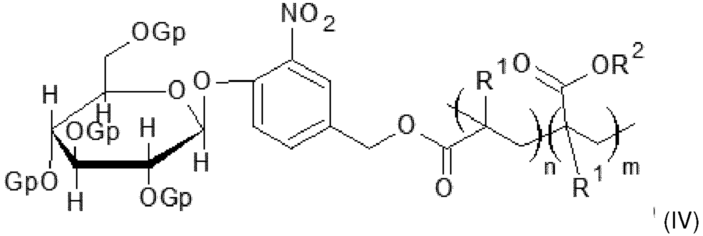 où R₁ représente indépendamment à chaque occurrence H ou CH₃; R₂ représente un alkyle, linéaire ou ramifié, en C₁-C₂₂, aryle, aralkyle, ces radicaux pouvant être substitués et pouvant contenir des hétéroatomes, Gp représente indépendamment à chaque occurrence H ou un groupe protecteur, et où n et m sont les nombre d'unités de monomères dans le polymère.

6. Structure immergée, notamment navire ou plateforme immergée, **caractérisée en ce qu'**elle comprend au moins sur une partie de sa surface, de préférence de sa surface immergée, un revêtement tel que défini à l'une quelconque des revendications 1 à 5.

7. Procédé de préparation d'un polymère bio-hydrolysable présentant la structure chimique (I) ou (IV) telle que définie selon la revendication 5, ledit procédé comprenant la polymérisation radicalaire du groupe polymérisable pour former ledit polymère bio-hydrolysable.

8. Procédé selon la revendication 7, **caractérisé en ce que** ladite polymérisation radicalaire est mise en oeuvre selon le procédé RAFT, de préférence en utilisant un dithioester, tel que par exemple le cyano isopropyl dithiobenzoate (CPDB), comme agent de transfert.

9. Procédé ou méthode de dégradation d'un revêtement selon l'une quelconque des revendications 1 à 5, comprenant :
la mise en contact d'un revêtement comprenant au moins polymère bio-hydrolysable comprenant au moins un sucre hydrolysable par une enzyme β-glucosidase tel que défini selon l'une quelconque des revendications 1 à 5, avec un microorganisme sécrétant une β-glucosidase, et
l'hydrolyse du polymère bio-hydrolysable.

10. Polymère bio-hydrolysable comprenant au moins un groupe liant un sucre hydrolysable avec un groupe polymérisable, ledit sucre étant hydrolysable par une enzyme β-glucosidase, ledit polymère présentant la structure chimique (I) ou (IV) telle que définie selon la revendication 5.

11. Composition, notamment de peinture d'une structure immergée, **caractérisée en ce qu'**elle comprend un polymère bio-hydrolysable étant tel que défini selon l'une quelconque des revendications 1 à 5 ou 10.

12. Utilisation d'un polymère bio-hydrolysable comprenant au moins un sucre hydrolysable par une enzyme β-glucosidase, par exemple β-D-glucosidase, notamment ledit polymère étant tel que défini selon l'une quelconque des revendications 1 à 5 ou 10, à titre de revêtement d'une structure immergée.

## Patentansprüche

1. Beschichtung einer Unterwasserstruktur, wobei die Beschichtung mindestens ein biohydrolysierbares Polymer umfasst, das mindestens einen durch ein β-Glucosidase-Enzym hydrolysierbaren Zucker umfasst.

2. Beschichtung nach Anspruch 1, **dadurch gekennzeichnet, dass** das biohydrolysierbare Polymer mindestens eine Gruppe von Atomen umfasst, die den hydrolysierbaren Zucker und eine polymerisierbare Gruppe kovalent binden.

3. Beschichtung nach Anspruch 1 oder 2, **dadurch gekennzeichnet, dass** die polymerisierbare Gruppe in Meerwasser hydrolysiert.

4. Beschichtung nach einem der Ansprüche 1 bis 3, **dadurch gekennzeichnet, dass** das die polymerisierbare Gruppe bildende Monomer eine konjugierte Gruppe umfasst, die eine Abgangsgruppe trägt, die nach Hydrolyse ein Carboxylat-Ion erzeugt.

5. Beschichtung nach einem der Ansprüche 1 bis 4, **dadurch gekennzeichnet, dass** das biohydrolysierbare Polymer die folgende chemische Struktur (I) oder (IV) aufweist: 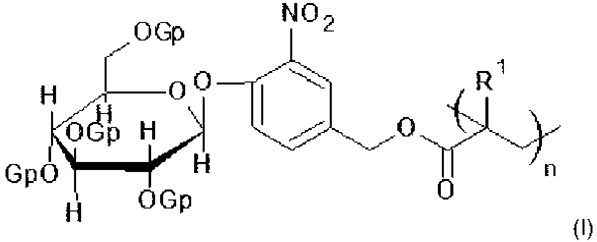 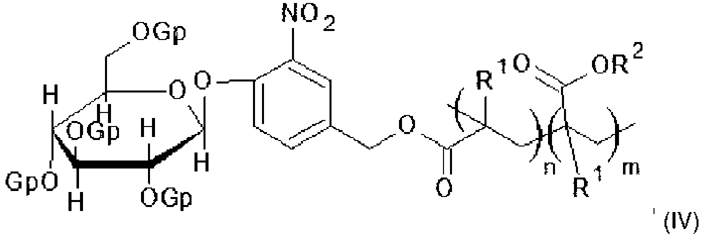 wobei R₁ unabhängig bei jedem Auftreten H oder CH₃ darstellt; R₂ ein lineares oder verzweigtes C₁-C₂₂-Alkyl, Aryl, Aralkyl darstellt, wobei diese Radikale substituiert sein können und Heteroatome enthalten können, Gp unabhängig bei jedem Auftreten H oder eine Schutzgruppe darstellt und wobei n und m die Anzahl der Monomereinheiten in dem Polymer sind.

6. Unterwasserstruktur, insbesondere Schiff oder Unterwasserplattform, **dadurch gekennzeichnet, dass** sie zumindest auf einem Teil ihrer Oberfläche, vorzugsweise ihrer Unterwasseroberfläche, eine Beschichtung nach einem der Ansprüche 1 bis 5 aufweist.

7. Verfahren zur Herstellung eines biohydrolysierbaren Polymers, das die chemische Struktur (I) oder (IV) nach Anspruch 5 aufweist, wobei das Verfahren die radikalische Polymerisation der polymerisierbaren Gruppe umfasst, um das biohydrolysierbare Polymer zu bilden.

8. Verfahren nach Anspruch 7, **dadurch gekennzeichnet, dass** die radikalische Polymerisation nach dem RAFT-Verfahren durchgeführt wird, vorzugsweise unter Verwendung eines Dithioesters wie z.B. Cyanoisopropyldithiobenzoat (CPDB) als Transfermittel.

9. Verfahren oder Methode zum Abbauen einer Beschichtung nach einem der Ansprüche 1 bis 5, umfassend:
das Inkontaktversetzen einer Beschichtung, die mindestens ein biohydrolysierbares Polymer umfasst, das mindestens einen durch ein β-Glucosidase-Enzym hydrolysierbaren Zucker nach einem der Ansprüche 1 bis 5 umfasst, mit einem Mikroorganismus, der eine β-Glucosidase sekretiert, und
die Hydrolyse des biohydrolysierbaren Polymers.

10. Biohydrolysierbares Polymer, umfassend mindestens eine Gruppe, die einen hydrolysierbaren Zucker mit einer polymerisierbaren Gruppe bindet, wobei der Zucker durch ein β-Glucosidase-Enzym hydrolysierbar ist, wobei das Polymer die chemische Struktur (I) oder (IV) nach Anspruch 5 aufweist.

11. Zusammensetzung, insbesondere zum Anstreichen einer Unterwasserstruktur, **dadurch gekennzeichnet, dass** sie ein biohydrolysierbares Polymer nach einem der Ansprüche 1 bis 5 oder 10 umfasst.

12. Verwendung eines biohydrolysierbaren Polymers, das mindestens einen durch ein β-Glucosidase-Enzym, z. B. β-D-Glucosidase, hydrolysierbaren Zucker umfasst, wobei insbesondere das Polymer nach einem der Ansprüche 1 bis 5 oder 10 ist, als Beschichtung einer Unterwasserstruktur.

## Claims

1. A coating for a submerged structure, said coating comprising at least one bio-hydrolysable polymer comprising at least one sugar hydrolysable by a β-glucosidase enzyme.

2. Coating according to claim 1, **characterised in that** the bio-hydrolysable polymer comprises at least one group of atoms covalently bonding the hydrolysable sugar and a polymerisable group.

3. Coating according to claim 1 or 2, **characterised in that** the polymerisable group hydrolyses in seawater.

4. Coating according to any one of claims 1 to 3, **characterized in that** the monomer forming the polymerizable group comprises a conjugated group carrying a labile group generating a carboxylate ion after hydrolysis.

5. Coating according to any one of claims 1 to 4, **characterized in that** the bio-hydrolysable polymer has the following chemical structure (I) or (IV): 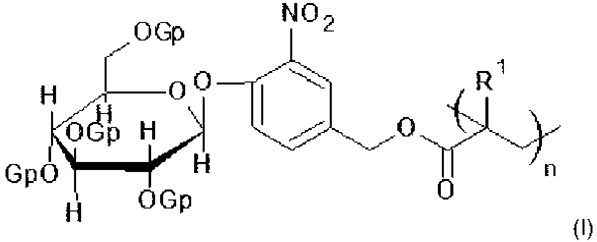 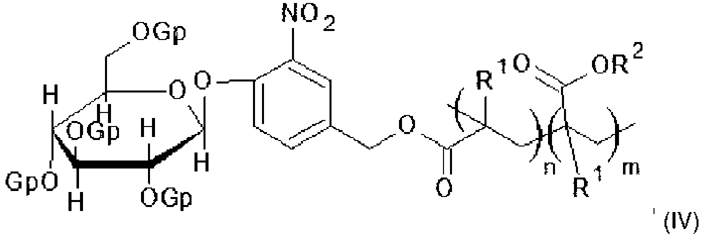 where R₁ is independently at each occurrence H or CH₃; R₂ is linear or branched C₁-C₂₂ alkyl, aryl, aralkyl, which radicals may be substituted and may contain heteroatoms, Gp is independently at each occurrence H or a protecting group, and where n and m are the number of monomer units in the polymer.

6. Submerged structure, in particular a ship or submerged platform, **characterised in that** it comprises at least one part of its surface, preferably its submerged surface, a coating as defined in any one of claims 1 to 5.

7. Process for preparing a bio-hydrolysable polymer having the chemical structure (I) or (IV) as defined in claim 5, said process comprising radical polymerisation of the polymerisable group to form said bio-hydrolysable polymer.

8. Process according to claim 7, **characterised in that** the said radical polymerization is carried out according to the RAFT process, preferably using a dithioester, such as for example cyano isopropyl dithiobenzoate (CPDB), as transfer agent.

9. A method or process for degrading a coating according to any one of claims 1 to 5, comprising:
contacting a coating comprising at least one bio-hydrolysable polymer comprising at least one sugar hydrolysable by a β-glucosidase enzyme as defined according to any one of claims 1 to 5, with a β-glucosidase-secreting microorganism, and
hydrolysis of the bio-hydrolysable polymer.

10. A bio-hydrolysable polymer comprising at least one group linking a hydrolysable sugar with a polymerisable group, said sugar being hydrolysable by a β-glucosidase enzyme, said polymer having the chemical structure (I) or (IV) as defined in claim 5.

11. Composition, in particular for painting an immersed structure, **characterized in that** it comprises a bio-hydrolysable polymer as defined according to any one of claims 1 to 5 or 10.

12. Use of a bio-hydrolysable polymer comprising at least one sugar hydrolysable by a β-glucosidase enzyme, for example β-D-glucosidase, in particular the said polymer being as defined according to any one of claims 1 to 5 or 10, as a coating for an immersed structure.
